Europäisches Patentamt

European Patent Office

Office européen des brevets

(19)

(11) Numéro de publication : **0 508 915 A1**

## (12) DEMANDE DE BREVET EUROPEEN

(21) Numéro de dépôt : **92420112.2**

(22) Date de dépôt : **07.04.92**

(51) Int. Cl.⁵ : **B01D 11/04**

(30) Priorité : **08.04.91 FR 9104466**

(43) Date de publication de la demande :
**14.10.92 Bulletin 92/42**

(84) Etats contractants désignés :
**DE ES FR GB**

(71) Demandeur : **ROBATEL S.A.**
**Route de Genève**
**F-69740 Genas (FR)**

(72) Inventeur : **Miachon, Jean-Paul**
**Résidence Florentine 43, 27, av. Lacassagne**
**F-69003 Lyon (FR)**

(74) Mandataire : **Karmin, Roger et al**
**Cabinet MONNIER 150, Cours Lafayette**
**F-69003 Lyon (FR)**

(54) **Perfectionnements aux extracteurs centrifuges du type mono-étage et multi-étages.**

(57)    L'extracteur comprend des moyens pour le recyclage de l'un au moins des deux liquides (A et B) à la sortie de la chambre de décantation en vue de le réintroduire dans la chambre de mélange. Le brevet décrit l'application de l'invention aux extracteurs centrifuges du type mono-étage et du type multi-étages.

Fig. 1

EP 0 508 915 A1

La présente invention a trait à des perfectionnements apportés aux extracteurs centrifuges du type mono-étage et multi-étages et elle a plus particulièrement pour objet la réalisation d'un système pour le recyclage de l'un ou de l'autre des deux liquides récupérés après la décantation.

Concernant la disposition générale des extracteurs centrifuges du genre visé par l'invention, on pourra avantageusement se référer aux brevets français 1 541 754, 2 093 055, 2 255 958 et 2 417 3240 au nom de la Demanderesse.

On remarque que dans le cas d'un extracteur centrifuge mono-étage, celui-ci comporte généralement une enceinte fixe, à l'intérieur de laquelle est entraîné en rotation un bol décanteur. La partie inférieure du bol est constituée par une turbine d'aspiration qui est éventuellement associée à un agitateur auxiliaire. La turbine et l'agitateur sont placés au niveau d'une cuve ou chambre de mélange déterminée à la base de l'enceinte fixe. Cette cuve comporte des tubulures radiales débouchant à l'extérieur de l'enceinte pour l'alimentation des deux liquides à mélanger.

La partie supérieure de l'enceinte comprend deux compartiments pour le recueil des liquides séparés dans le bol. Ces compartiments communiquent par des orifices externes avec l'extérieur ou avec l'entrée d'un extracteur centrifuge voisin.

Deux liquides de densités différentes (une phase lourde et une phase légère) sont introduits dans la cuve de l'enceinte en vue d'être intimement mélangés. Le mélange est ensuite aspiré à l'intérieur du bol pour y être séparé sous l'action de la force centrifuge. Les deux liquides séparés sont ainsi respectivement déchargés en continu dans les compartiments prévus dans la partie supérieure de l'enceinte.

Par ailleurs, un extracteur centrifuge multi-étages comporte essentiellement un bol commun monté à rotation autour de son axe de symétrie, des agitateurs portés par un fût fixe ou tournant autour du même axe à une vitesse plus faible que celle du bol, et enfin des déflecteurs formant chicanes fixés sur le bol, délimitant ainsi avec celui-ci des gorges ou des chambres à bords circulaires.

On constate alors que chacune des chambres de mélange est intercalée entre deux chambres de décantation et réciproquement. Chaque chambre de décantation comporte un déversoir pour la phase légère qui débouche au-dessus de la chambre de mélange de l'étage inférieur et un canal vertical d'évacuation de la phase lourde qui débouche au-dessus de la chambre de mélange de l'étage supérieur. Cette disposition autorise ainsi le liquide de phase lourde et le liquide de phase légère à parcourir l'extracteur centrifuge dans des sens inverses.

De tels extracteurs centrifuges comportent certains inconvénients en ce qui concerne l'efficacité du transfert des solutés d'une phase dans l'autre. Cet inconvénient est dû plus spécialement à la décantation effectuée ultérieurement, ou aux débits des deux liquides qui sont trop différents.

C'est à ces inconvénients qu'entend plus particulièrement remédier la présente invention.

L'invention a pour but de réaliser des moyens pour prélever l'un des deux liquides à la sortie de la chambre de décantation et de le réintroduire dans la zone de mélange de l'extracteur centrifuge.

Cette étape de prélèvement ou de recyclage de l'un des deux liquides contenus dans l'extracteur centrifuge permet de modifier la teneur des deux phases mélangées à l'intérieur de la cuve en vue d'obtenir une meilleure décantation ou un meilleur transfert.

Le dessin annexé, donné à titre d'exemple, permettra de mieux comprendre l'invention, les caractéristiques qu'elle présente et les avantages qu'elle est susceptible de procurer :

Fig. 1 est une vue en coupe verticale illustrant un extracteur centrifuge mono-étage suivant la présente invention.

Fig. 2 est une coupe transversale montrant un extracteur centrifuge multi-étages pourvu d'un système de recyclage pour le liquide de phase lourde.

Fig. 3 est une vue de détail agrandie représentant le système de recyclage de fig. 2.

Fig. 4 est une vue semblable à celle de fig. 3, mais illustrant un système de recyclage pour le liquide de phase légère d'un extracteur centrifuge multi-étages.

Fig. 5 est une vue de détail montrant une variante du système de recyclage au niveau des deux liquides mélangés à l'intérieur d'un extracteur centrifuge multi-étages.

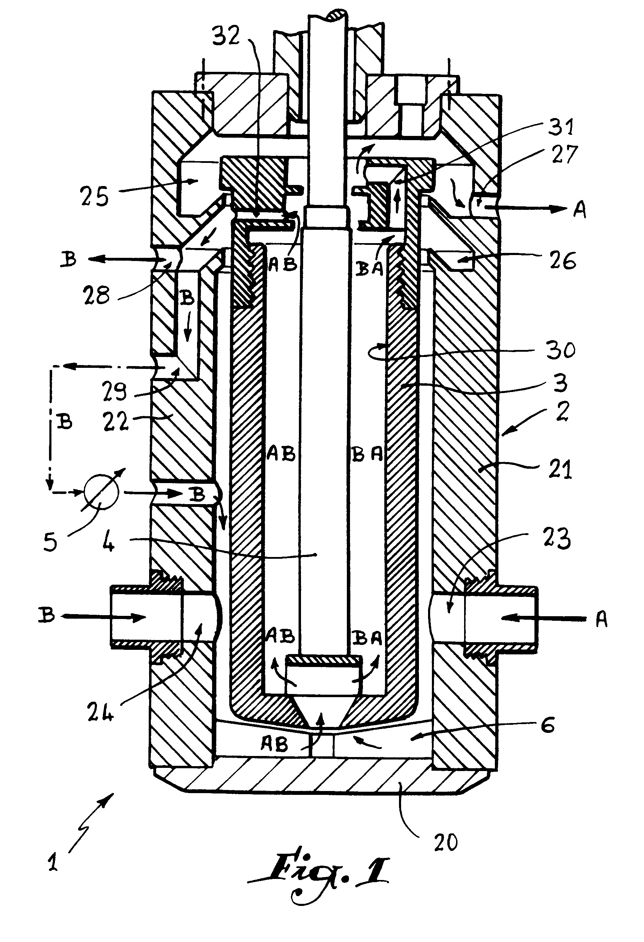

On a représenté en fig. 1 un extracteur centrifuge mono-étage 1 de type connu en soi, comprenant une enceinte fixe 2 à l'intérieur de laquelle est prévu un bol décanteur 3 qui est entraîné en rotation autour de son axe de symétrie au moyen d'un arbre moteur vertical 4.

Au-dessus du fond 20 de l'enceinte 2 et dans les parois latérales 21, 22 sont percés deux trous débouchants 23, 24. Dans la partie supérieure et interne des parois latérales 21 et 22 sont réalisés deux compartiments annulaires de recueil 25, 26, disposés l'un au-dessus de l'autre et communiquant respectivement avec l'extérieur de l'enceinte par des ouvertures 27, 28.

Le fond du compartiment 26 est percé d'un canal 29 qui peut être combiné, par exemple, avec une pompe volumétrique 5, avant de venir déboucher à l'intérieur de l'enceinte 2 et au-dessus du trou latéral 24.

Le bol décanteur 3 placé à l'intérieur de l'enceinte 2 comporte à sa base une turbine d'aspiration éventuellement associée à un agitateur auxiliaire connu en soi et non représenté. Cet ensemble permet la liaison entre la partie interne 30 du bol 3 et l'espace libre 6 formé entre le fond 20 de l'enceinte 2 et la base dudit bol. A la manière connue, l'espace libre constitue une cuve ou une chambre de mélange de même référence 6 qui communique avec l'extérieur ou avec un extracteur centrifuge voisin par l'intermédiaire des trous latéraux 23 et 24, comme on le verra mieux plus loin.

La partie supérieure du bol décanteur 3 est percée de deux orifices annulaires 31 et 32 qui débouchent respectivement au-dessus des compartiments de recueil 25 et 26.

L'extracteur centrifuge mono-étage qui vient d'être décrit fonctionne de la manière suivante :

Le liquide à traiter A (phase lourde) et le liquide de traitement B (phase légère) sont amenés dans la cuve 6 de l'extracteur par l'intermédiaire des trous latéraux 23 et 24. Ces liquides peuvent provenir soit directement de l'extérieur, soit d'un extracteur centrifuge voisin en vue d'améliorer la qualité du transfert entre les deux liquides.

Les liquides A et B sont mélangés sous l'effet de l'agitateur et de la différence de vitesses entre le bol décanteur 3 et l'enceinte 2. Le mélange de deux liquides est aspiré, par la turbine connue en soi, dans la partie interne 30 du bol décanteur 3, de sorte que le composant le plus lourd se sépare du plus léger sous l'effet de la force centrifuge. Ce dernier s'échappe par débordement par l'orifice 32 pour être recueilli dans le compartiment annulaire 26 de l'enceinte 2, tandis que le composant le plus lourd s'écoule par l'orifice 31 pour être rassemblé dans le compartiment 25 en vue de son évacuation vers l'extérieur par l'ouverture 27. Cette évacuation peut être par exemple effectuée au moyen de différentes tuyauteries conduisant vers un autre extracteur centrifuge voisin.

Le composant le plus léger est séparé en deux sous l'effet de la pompe volumétrique 5 qui permet d'aspirer une partie du composant pour la réintroduire dans la chambre de mélange 6 en vue de la mélanger avec les liquides A et B provenant des trous latéraux 23 et 24. L'autre partie de la phase légère B sortant du compartiment 26 est dirigée par l'ouverture 28 soit vers l'extérieur, soit vers un autre extracteur, comme déjà précisé.

La pompe volumétrique 5 peut être éventuellement remplacée par un ajutage fixe ou réglable. La différence de niveau entre le compartiment 26 et le canal 29 de réintroduction du liquide recyclé permet d'assurer la pression nécessaire à l'écoulement.

Bien évidemment, le recyclage peut s'effectuer de la même manière pour le liquide de phase lourde A.

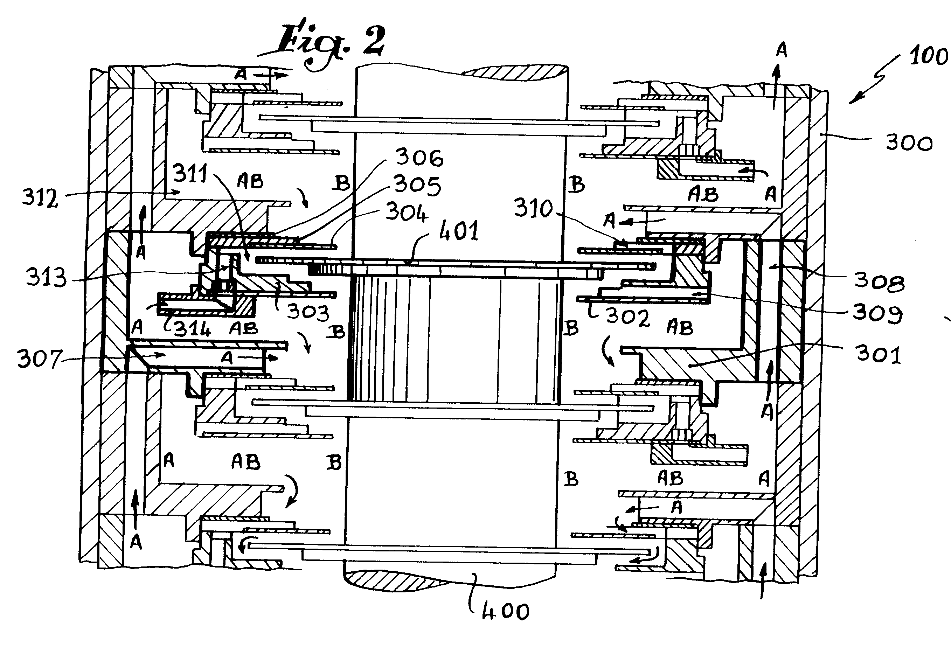

On a représenté en fig. 2 à 5 un extracteur centrifuge multi-étages comportant un dispositif suivant l'invention pour le recyclage de l'un ou de l'autre des liquides circulant à l'intérieur dudit extracteur.

L'extracteur centrifuge multi-étages 100 comprend à la manière connue un bol décanteur 300 commun à tous les étages. Le bol est monté à rotation autour de son axe de symétrie à l'intérieur d'un carter fixe non représenté. Au milieu du bol 300 et suivant le même axe de symétrie est prévu un fût 400 qui est monté soit fixe, soit tournant à une vitesse plus faible que celle dudit bol.

Le fût 400 comporte des agitateurs 401 disposés à des distances équivalentes dont on verra mieux plus loin le fonctionnement.

Le bol décanteur 300 est constitué d'un certain nombre d'étages qui sont construits suivant la même structure, mais décalés angulairement les uns par rapport aux autres pour assurer la communication des liquides des uns vers les autres.

En effet, le bol décanteur 300 comprend à chaque étage des déflecteurs 301, 302, 303, 304, 305 et 306 qui délimitent des canaux 307, 308, 309, 310, une chambre de mélange 311 et une chambre de décantation 312.

On remarque que chacune des chambres de mélange 311 est intercalée entre deux chambres de décantation 312, et réciproquement deux chambres de mélange enserrent une chambre de décantation. En règle générale, chacune des chambres de décantation 312 comporte un canal vertical 308 qui communique avec un canal horizontal 307 de manière à venir déboucher au-dessus de chacune des chambres de mélange 311 des étages se trouvant directement au-dessus.

Les agitateurs 401 solidaires du fût fixe ou tournant 400 sont placés à la manière connue dans les chambres de mélange 311 de chaque étage de l'extracteur centrifuge 100.

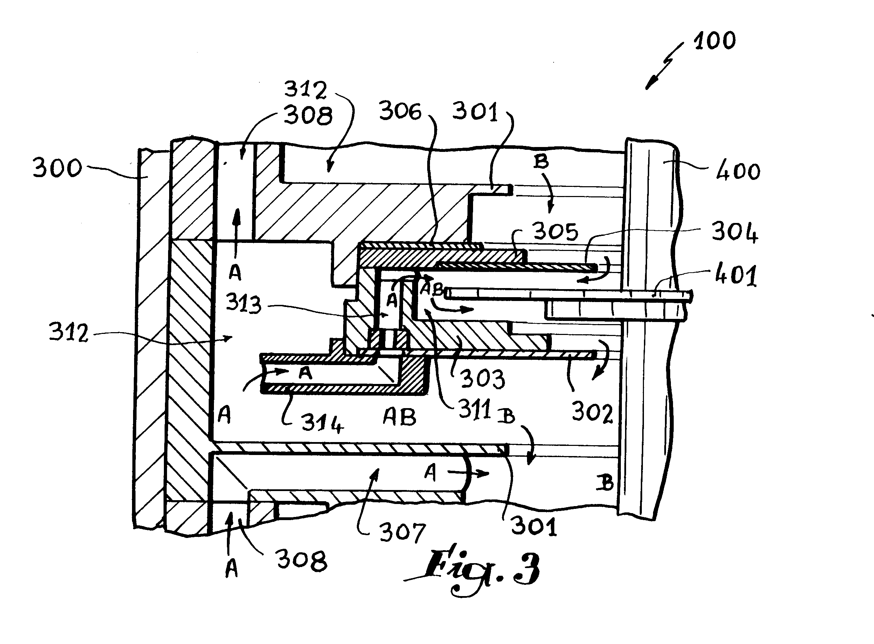

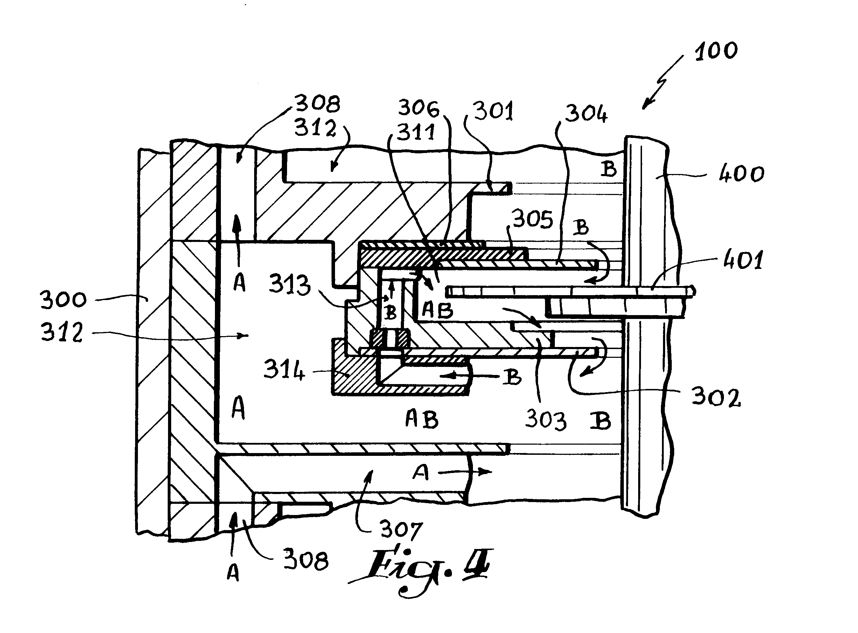

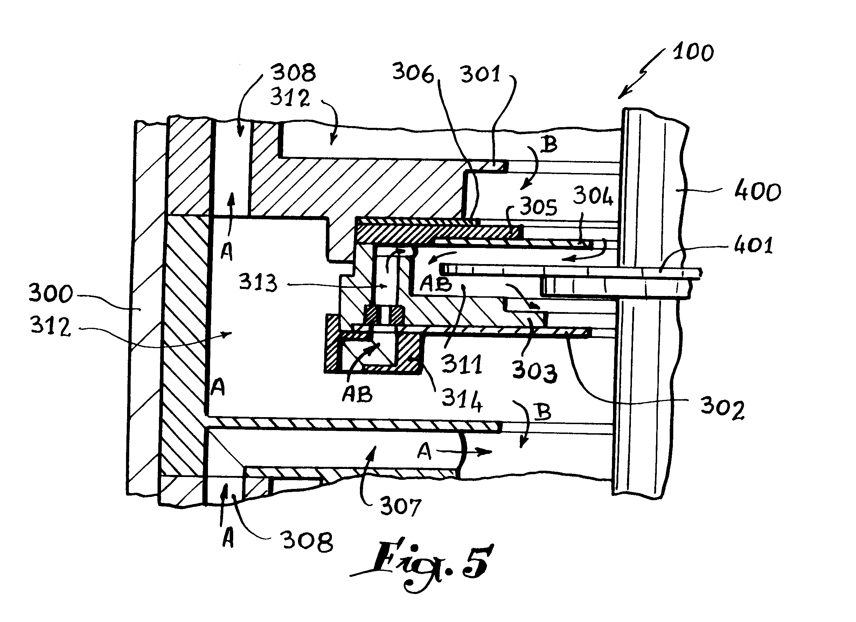

Les déflecteurs 301 et 303 de chaque étage de l'extracteur sont percés d'un trou vertical 313 permettant à la chambre de décantation 312 de communiquer directement avec la chambre de mélange 311 du même étage. Le trou vertical 313 est pratiqué entre les canaux 309 du même étage du bol décanteur 300. A l'une des extrémités du trou 313 est montée de manière étanche une tubulure 314 qui débouche, suivant les cas, soit du côté du diamètre extérieur de la chambre de décantation 312 (fig. 2 et 3), soit du côté du fût fixe ou tournant 400 (fig. 4), soit encore au milieu de la chambre de décantation 312 (fig. 5).

L'extracteur centrifuge multi-étages 100 ci-dessus décrit fonctionne de la manière suivante :

Le liquide de phase lourde A décanté dans l'une des chambres 312 monte à l'étage supérieur par les canaux 308, 307 pour se déverser sur le déflecteur 306 de l'étage en question qui fait office de seuil de déversoir. Simultanément, le liquide de phase légère B décanté dans l'une des chambres 312 descend à l'étage inférieur en franchissant le déflecteur 301 de manière à venir sur la surface du liquide A sus-mentionné. Les deux liquides A et B se déversent dans le canal 310 délimité par les déflecteurs 304 et 306 pour arriver dans la chambre de mélange 311.

L'agitateur 401 du fût fixe ou tournant 400 achève le mélange des deux liquides A et B afin que l'émulsion s'écoule au-dessus du bord du déflecteur 303 pour arriver dans le canal 309 compris entre les déflecteurs 302 et 303. L'émulsion AB se déverse à la sortie du canal 309 dans la chambre de décantation 312 où les deux liquides se décantent par centrifugation.

En fig. 2 et 3, on remarque que lorsque le liquide de phase lourde A est décanté, une partie de celui-ci traverse la tubulure 314 et le trou 313 pour se déverser dans la chambre de mélange 311 du même étage. Simultanément, l'autre partie du liquide A emprunte les canaux 308 et 307 pour effectuer les différentes étapes décrites précédemment. Il y a donc bien phénomène de recyclage.

En fig. 4, c'est une partie du liquide de phase légère B qui est prélevée au moyen de la tubulure 314 en vue de la réintroduire dans la chambre de mélange 311 du même étage, pendant que l'autre partie du liquide B déborde par dessus le déflecteur 301 pour descendre à l'étage inférieur.

En fig. 5, on recycle une partie de l'émulsion des deux liquides A, B avant leur décantation pour les acheminer tous deux au moyen de la tubulure 314 et du trou 313 dans la chambre de mélange 311.

Bien entendu, le recyclage de l'un ou de l'autre des liquides A et B dans la chambre de mélange 311 par l'intermédiaire de la tubulure 314 et du trou 313 se réalise lorsque la pression établie dans le fond de la chambre de mélange 311 est inférieure à celle régnant dans la chambre de décantation 312.

La pression de la chambre de décantation 312 est déterminée par la densité des liquides A et B, par l'épaisseur des liquides et par la vitesse de rotation des liquides qui est pratiquement égale à la vitesse de rotation du bol décanteur 300.

La pression dans la chambre de mélange 311 est déterminée par la densité des liquides A et B, par l'épaisseur de ces liquides et par la vitesse de rotation des liquides qui est inférieure à celle du bol 300, car les agitateurs 401 produisent un ralentissement de la vitesse des liquides.

En effet, en dimensionnant de manière appropriée les agitateurs 401, il est possible de ralentir de façon adéquate la vitesse des liquides dans les chambres de mélange 311 pour créer une différence de pression entre le fond desdites chambres et les chambres de décantation 312.

On note également qu'il est possible de combiner dans un même extracteur centrifuge 100 des tubulures de recyclage 314 de phase lourde (fig. 2 et 3) et de phase légère (fig. 4) à des étages différents.

De même, l'axe de symétrie de l'extracteur 100 peut être prévu horizontal ou incliné, sans pour cela changer le fonctionnement.

## Revendications

1. Extracteur centrifuge mono-étage ou multi-étages, caractérisé en ce qu'il comprend un bol décanteur (3, 300) entraîné en rotation pour la mise en émulsion de deux liquides non miscibles (A et B) et des moyens pour le recyclage de l'un au moins des deux liquides à la sortie de la chambre de décantation (30, 312) en vue de le réintroduire dans la chambre de mélange (6, 311).

2. Extracteur centrifuge du type mono-étage suivant la revendication 1, caractérisé en ce que les moyens de recyclage consistent en un canal (29) percé dans le fond de l'un des compartiments de recueil (25, 26) pour venir déboucher dans la chambre de mélange (6) qui est prévue entre le bol décanteur (3) et le fond (20) de l'enceinte fixe (2).

3. Extracteur centrifuge du type multi-étages suivant la revendication 1, caractérisé en ce que les moyens de recyclage comportent une tubulure (314) qui coopère avec un trou (313) ménagé dans les déflecteurs (302, 303) entre les canaux (309), de manière à relier la chambre de décantation (312) et la chambre de mélange (311).

4. Extracteur centrifuge du type mono-étage suivant les revendications 1 et 2, caractérisé en ce que le canal (29) est combiné avec une pompe volumétrique (5) pour aspirer une partie du liquide à recycler.

5. Extracteur centrifuge du type mono-étage suivant la revendication 1, caractérisé en ce que le canal (29) est raccordé à une tuyauterie extérieure de l'enceinte (2).

6. Extracteur centrifuge du type multi-étages suivant les revendications 1 et 3, caractérisé en ce que la tubulure (314) est tournée du côté du diamètre extérieur de la chambre de décantation (312) pour prélever uniquement une partie du liquide de phase lourde (A).

7. Extracteur centrifuge du type multi-étages suivant les revendications 1 et 3, caractérisé en ce que la tubulure (314) débouche du côté du fût, fixe ou tournant (400), de manière à recycler une partie du liquide de phase légère (B).

8. Extracteur centrifuge du type multi-étages suivant les revendications 1 et 3, caractérisé en ce que la tubulure (314) est placée au milieu de la chambre de décantation (312) pour prélever une partie de l'émulsion (A, B) avant la décantation.

**9.** Extracteur centrifuge du type multi-étages suivant l'une quelconque des revendications 1, 3, 6, 7 et 8, caractérisé en ce que le bol décanteur (300) comporte en outre des tubulures (314) différentes à chaque étage de manière à recycler dans certains étages le liquide de phase lourde (A) et dans d'autres le liquide de phase légère (B).

**Fig. 1**

*Fig. 2*

100

300

306
305
304
311
312
AB
B
401
310
B
A
313
303
A
314 AB
B
302 AB
308
309
307
A
A
301
AB
B
A
B
A
AB
A
400

EP 0 508 915 A1

Fig. 3

Fig. 4

EP 0 508 915 A1

*Fig. 5*

EP 0 508 915 A1

**Office européen des brevets**

## RAPPORT DE RECHERCHE EUROPEENNE

Numero de la demande

EP    92 42 0112

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 590 496 (OUTOKUMPU) | 1 | B01D11/04 |
| A | * page 6, ligne 17 - page 15, ligne 27 * | 2,4,5 | |
| | --- | | |
| Y | US-A-2 776 193 (LOJO HABICHT) | 1 | |
| A | * colonne 5, ligne 20 - colonne 16, ligne 50 * | 3,6-9 | |
| | --- | | |
| Y | FR-A-2 600 268 (DORYOKURO KAKUNEN RYO KAIHATSU JIGYODAN) | 1 | |
| | * figures 1-5 * | | |
| | --- | | |
| A | US-A-2 646 439 (STEWARD W. GLOYER) | 1-9 | |
| | * colonne 1 - colonne 12 * | | |
| | --- | | |
| A | FR-A-2 576 525 (COMMISSARIAT A L'ENERGIE ATOMIQUE) | 1-9 | |
| | * page 1 - page 12 * | | |
| | ----- | | |

**DOMAINES TECHNIQUES RECHERCHES (Int. Cl.5)**

B01D

Le présent rapport a été établi pour toutes les revendications

| Lieu de la recherche | Date d'achèvement de la recherche | Examinateur |
|---|---|---|
| LA HAYE | 07 JUILLET 1992 | DE PAEPE P.F.J. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)